# EUROPEAN PATENT APPLICATION

(11) **EP 3 742 283 A1**
(43) Date of publication of application: **25.11.2020**
(21) Application number: 20171091.0
(22) Date of filing: 23.04.2020
(51) Int. Cl.: G06F 7/499

(54) **ARITHMETIC PROCESSING DEVICE, METHOD FOR CONTROLLING ARITHMETIC PROCESSING DEVICE, AND PROGRAM FOR CONTROLLING ARITHMETIC PROCESSING DEVICE**

(30) Priority: 21.05.2019 JP 2019095513
(71) Applicant: FUJITSU LIMITED, Kanagawa 211-8588 (JP)
(72) Inventor: NOTSU, Takahiro, Kawasaki-shi, Kanagawa 211-8588 (JP); YODA, Katsuhiro, Kawasaki-shi, Kanagawa 211-8588 (JP)
(74) Representative: Haseltine Lake Kempner LLP

(57) **Abstract**

A method implemented by an arithmetic processing device configured to repeatedly execute similar fixed-point arithmetic operations a plurality of times, the process includes: acquiring, in each of iterations, decimal point position information of the next iteration from statistical information on the arithmetic operations of each of the iterations; calculating an adjustment amount based on a result of comparing the decimal point position information of the next iteration with the already acquired decimal point position information of the previous iteration; and using the decimal point position information of the next iteration and the adjustment amount to execute the fixed-point arithmetic operations in the next iteration.

## Description

### FIELD

The embodiment discussed herein is related to an arithmetic processing device, a method for controlling an arithmetic processing device, and a program for controlling an arithmetic processing device.

### BACKGROUND

It is found that a deep neural network (DNN) obtained by extending a neural network to multiple layers is applicable to previously difficult issues and is expected to be applied to various fields. The neural network is obtained by mechanically imitating brain nerve cells (neurons).

The neural network serves as a single function as a whole. When input is given to the neural network, the neural network outputs a value determined in accordance with the input. The neural network is different from existing programs in that, when a target value that is also called a teacher signal is given to the input, the neural network adjusts a value to be output based on the target value so that the value to be output is closer to a target. In the neural network, many parameters exist. By adjusting values of the parameters, a desired function form is realized.

Since entire calculation of the neural network may be mathematically represented, partial derivatives of the parameters with respect to an evaluation result of output of the neural network may be calculated. The evaluation result is a square error or the like. Since the evaluation result decreases with respect to each of the parameters, or, for example, the parameters are changed so that values of the partial derivatives of the parameters decrease and the evaluation result decreases, the neural network becomes more similar to the target function form. Although it is difficult to collectively calculate the partial derivatives of the parameters once, the partial derivatives of the parameters may be mechanically calculated in order from a layer on the output side of the neural network to a layer on the input side of the neural network by a method that is called error back-propagation. This mechanical learning method by the multilayer neural network is referred to as deep learning. In the deep learning, various arithmetic operations including multiplication, a product-sum operation, and vector multiplication are executed.

In the deep learning, demands for the accuracy of the individual arithmetic operations are not as strict as demands for other computer processing. For example, for existing signal processing or the like, a programmer develops a computer program so that digit overflow is suppressed as much as possible. On the other hand, in the deep learning, it is acceptable for large values to be saturated to some extent. This is due to the fact that, in the deep learning, the adjustment of coefficients (weights) in a convolution operation of multiple input data is a main process and data significantly deviating from the input data is treated as unimportant in many cases. Furthermore, this is due to the fact that, since a large amount of data is repeatedly used to adjust the coefficients, digits of a value saturated once are adjusted based on the progress of the learning and the value is not saturated and may be reflected in the coefficient adjustment.

Since the area of a chip of an arithmetic processing device for deep learning is reduced, power performance is improved based on the foregoing characteristics of the deep learning, and the like it is considered that an integer arithmetic operation using fixed-point numbers is used without using a floating-point number. This is due to the fact that a circuit configuration for an integer arithmetic operation may be made simpler than a circuit configuration for a floating-point arithmetic operation.

However, since a dynamic range of fixed-point numbers is small, the accuracy of an arithmetic operation using fixed-point numbers is lower than that of an arithmetic operation using floating-point numbers in some cases. Therefore, even in the deep learning, consideration is requested for the accuracy of representation of small values or, for example, the number of significant digits. Accordingly, a technique for extending fixed-point numbers has been proposed.

For example, in the deep learning, a range of data to be represented changes based on the type of the data or the progress of the learning. When an arithmetic operation is executed using a fixed-point number, it is preferable that a scale factor indicating a decimal point position be approximately adjusted. The scale factor is a multiplier of the original decimal representation and quantized integer representation or, for example, data represented using the fixed-point number. The fixed-point representation is applied as a signed integer value obtained by truncating a decimal part of a value obtained by multiplying the original value by a scale factor of 2^{ω} (ω is an integer). For example, fixed-point representation of a value x is applied as R(x, ω) = ceil(x × 2^{ω}). The ceil function is a function of truncating the decimal part. In this case, 2^{ω} is the scale factor. For example, there is a technique for acquiring statistical information on bit positions of calculation results for each iteration in deep learning and determining a scale factor based on the acquired statistical information.

In the technique for determining a scale factor, the scale factor is updated in the following procedure. First, output data is calculated from input data. Then, when the generation of all the output data is terminated, the statistical information is analyzed and the scale factor to be referenced in an iteration is updated. The updated scale factor is used at the time of the output of the data in the next iteration.

As a technique for a fixed-point arithmetic operation, there is a technique for executing a neural network process with fixed-point precision, but holding weight values with floating-point precision and executing a floating-point arithmetic operation upon the update of the weights. There is a technique for determining a decimal point position based on a range of peripheral pixel values of which an average value is calculated in a fixed-point arithmetic operation of calculating the average value of the peripheral pixel values in image processing. There is a technique for calculating a decimal point position in a fixed-point arithmetic operation based on an average value of signals to be processed in digital processing of audio signals.

Examples of the related art are Japanese Laid-open Patent Publication No. 07-84975, Japanese Laid-open Patent Publication No. 2008-059287, and Japanese Laid-open Patent Publication No. 04-190399.

### SUMMARY

### [TECHNICAL PROBLEM]

However, in the foregoing method for using a scale factor calculated from statistical information of a previous iteration for output of a next iteration, the iteration in which the statistical information is acquired is different from the iteration in which the scale factor predicted based on the statistical information is used. When distributions of generated data are different between iterations, it is difficult to correctly represent a value using the predicted scale factor.

For example, in an initial stage of learning, a change in a distribution of values is large. Therefore, in the initial stage of the learning, when fixed-point representation is applied, the probability with which overflow occurs may increase and the overflow may reduce the accuracy. In the initial stage of the learning, it is preferable to add an offset to a predicted scale factor and cause a fixed-point number to have an extra upper digit. By executing the foregoing, overflow may be suppressed and the accuracy may be maintained. On the other hand, when the learning progresses to some extent, the change in the distribution of the values decreases. Therefore, the fixed-point representation may be applied even when the scale factor is not adjusted using the offset.

As described above, an appropriate decimal point position in the fixed-point representation changes depending on the progress of the learning. Therefore, in the method of applying the fixed-point representation using the scale factor calculated from the statistical information of the previous iteration for the output of the next iteration, it is difficult to improve the accuracy of learning using fixed-point numbers.

In the technique using floating-point numbers for weight values in the neural network process with the fixed-point precision, a decimal point position is not changed in accordance with data being trained, and it is difficult to improve the accuracy of the learning. In the technique for determining a decimal point position based on a range of peripheral pixel values of which an average value is calculated, a decimal point position is calculated using a calculation formula, and thus it is difficult to obtain a decimal point position according to the actual calculation and improve the accuracy of the learning. In the technique for calculating a decimal point position in a fixed-point arithmetic operation based on an average value of signals to be processed, the decimal point position is determined based on a distribution of calculation results, and thus it is difficult to determine an appropriate decimal point position and improve the accuracy of the learning.

The techniques disclosed herein have been devised under the foregoing circumstances, and it is desirable to provide an arithmetic processing device, a program for controlling the arithmetic processing device, and a method for controlling the arithmetic processing device, which improve the accuracy of learning using a fixed-point number.

### [SOLUTION TO PROBLEM]

According to an embodiment of one aspect of the invention, an arithmetic processing device includes: a memory; and a processor coupled to the memory, the processor being configured to execute an arithmetic execution processing that includes acquiring decimal point position information and an adjustment amount and uses the acquired decimal point position information and the acquired adjustment amount to repeatedly execute similar fixed-point arithmetic operations a plurality of times, execute an acquiring processing that acquiring, in each of iterations, decimal point position information of the next iteration from statistical information on the arithmetic operations of each of the iterations and provides the acquired decimal point position information to the arithmetic execution processing, and execute an adjustment amount calculation processing that calculating an adjustment amount based on a result of comparing the decimal point position information of the next iteration with the decimal point position information of the previous iteration and provides the calculated adjustment amount to the arithmetic execution processing.

### [ADVANTAGEOUS EFFECTS OF INVENTION]

According to an aspect of the disclosure, the accuracy of learning using a fixed-point number may be improved.

### BRIEF DESCRIPTION OF DRAWINGS

The invention is described, by way of example only, with reference to the following drawings, in which:
FIG. 1 is a schematic configuration diagram of a deep learning system according to an embodiment;
FIG. 2 is a hardware configuration diagram of an example of a host machine;
FIG. 3 is a hardware configuration diagram of an example of a deep learning execution device;
FIG. 4 is a block diagram of the deep learning execution device according to the embodiment;
FIG. 5 illustrates an overview of an arithmetic operation;
FIG. 6 is a diagram illustrating relationships between processes to be executed in iterations in a normal arithmetic operation;
FIG. 7 is a diagram illustrating relationships between processes to be executed in iterations in offset update;
FIG. 8 is a flowchart of a process of entire deep learning;
FIG. 9 is a flowchart of switching between an offset update process and the normal arithmetic operation in a learning process;
FIG. 10 is a flowchart of the offset update process;
FIG. 11 is a flowchart of an offset calculation process in the case where a difference between exponents of scale factors is set as an offset;
FIG. 12 is a flowchart of the normal arithmetic operation;
FIG. 13 is a diagram illustrating some examples of an index able to be used as the offset;
FIG. 14 is a flowchart of an offset calculation process in the case where a value obtained by subtracting the maximum value of exponents of scale factors from the minimum value of the exponents of the scale factors is set as the offset;
FIG. 15 is a flowchart of an offset calculation process in the case where a value obtained by truncating a decimal part of half of the value obtained by subtracting the maximum value of the exponents of the scale factors from the minimum value of the exponents of the scale factors is set as the offset;
FIG. 16 is a flowchart of an offset calculation process in the case where a value obtained by truncating a decimal part of a value obtained by subtracting the maximum value of the exponents of the scale factors from the average value of the exponents of the scale factors is set as the offset;
FIG. 17 is a flowchart of an offset calculation process in the case where a value obtained by truncating a decimal part of a value obtained by subtracting the average value of the exponents of the scale factors from the minimum value of the exponents of the scale factors is set as the offset; and
FIG. 18 is a flowchart of an offset calculation process in the case where a value obtained by truncating a decimal part of a value obtained by reversing the sign of a standard deviation of the exponents of the scale factors is set as the offset.

### DESCRIPTION OF EMBODIMENT(S)

Hereinafter, an embodiment of an arithmetic processing device, a program for controlling the arithmetic processing device, and a method for controlling the arithmetic processing device, which are disclosed herein, is described in detail based on the drawings. The arithmetic processing device, the program for controlling the arithmetic processing device, and the method for controlling the arithmetic processing device, which are disclosed herein, are not limited by the following embodiment.

### [Embodiment]

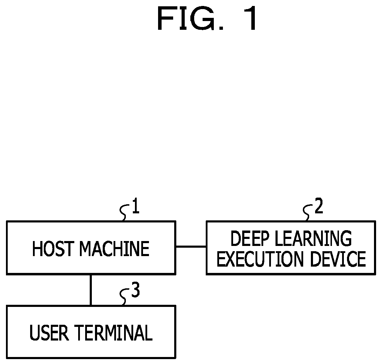

FIG. 1 is a schematic configuration diagram of a deep learning system according to the embodiment. In the embodiment, the deep learning system includes a host machine 1, a deep learning execution device 2, and a user terminal 3.

The host machine 1 and the deep learning execution device 2 are coupled to each other via dedicated interfaces. A user couples the user terminal 3 to the host machine 1 and uses the user terminal 3 to operate the deep learning execution device 2 to cause the deep learning execution device 2 to execute deep learning. The host machine 1 generates a program to be executed by the deep learning execution device 2, in accordance with an instruction provided by the user and input from the user terminal 3, and transmits the program to the deep learning execution device 2. The deep learning execution device 2 executes the transmitted program and generates data of results of the execution.

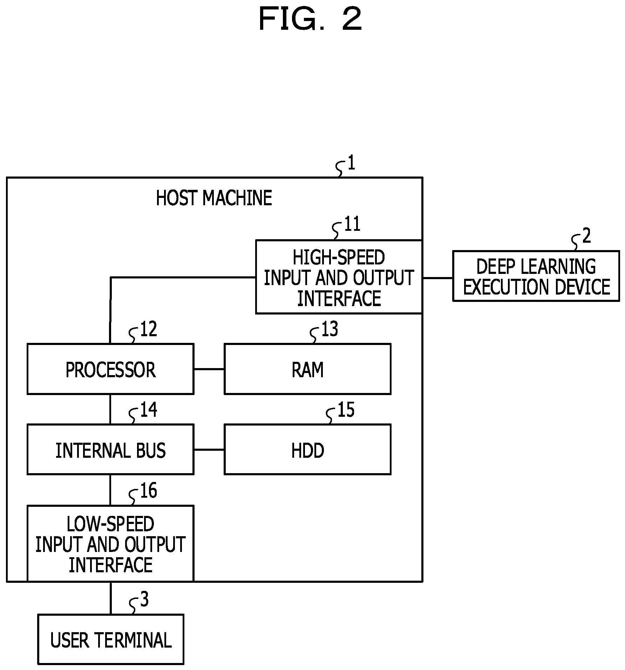

FIG. 2 is a hardware configuration diagram of an example of the host machine. The host machine 1 includes a high-speed input and output interface 11, a processor 12, a random-access memory (RAM) 13, an internal bus 14, a hard disk drive (HDD) 15, and a low-speed input and output interface 16, for example.

The processor 12 is coupled to the high-speed input and output interface 11 and the RAM 13. The processor 12 is coupled to the HDD 15 and the low-speed input and output interface 16 via the internal bus 14. The processor 12 reads a program stored in the HDD 15, loads the program into the RAM 13, and executes the program.

The high-speed input and output interface 11 couples the processor 12 to the deep learning execution device 2 installed outside the host machine 1. The high-speed input and output interface 11 executes communication using a protocol, such as Peripheral Component Interconnect Express (PCI Express).

The RAM 13 stores the program to be executed by the processor 12 and data. The RAM 13 is, for example, a Double Data Rate 4-Synchronous Dynamic Random-Access Memory (DDR4-SDRAM).

The internal bus 14 couples a lower-speed peripheral device than the processor 12 to the processor 12. The internal bus 14 relays communication between the peripheral device and the processor 12. The HDD 15 permanently stores the program to be executed by the processor 12 and data.

The low-speed input and output interface 16 is an interface for communication between the user terminal 3 and the host machine 1. The low-speed input and output interface 16 is used for communication with a keyboard and a mouse in accordance with Universal Serial Bus (USB) and communication with a network conforming to Ethernet (registered trademark).

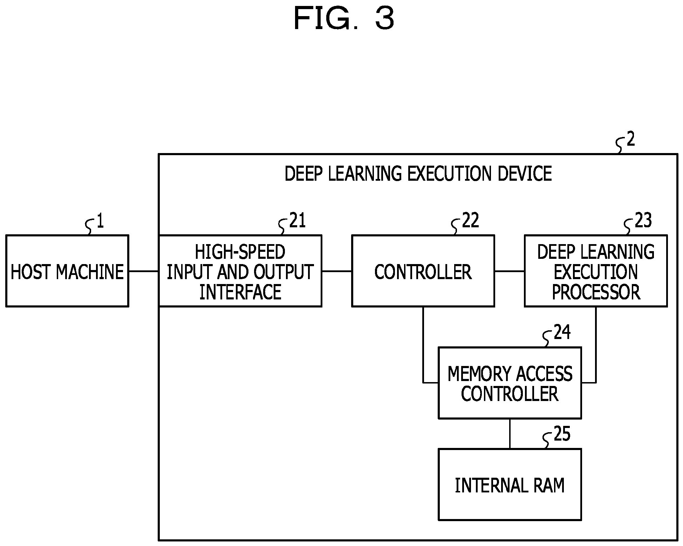

FIG. 3 is a hardware configuration diagram of an example of the deep learning execution device. The deep learning execution device 2 includes, for example, a high-speed input and output interface 21, a controller 22, a deep learning execution processor 23, a memory access controller 24, and an internal RAM 25. The deep learning execution device 2 is an example of the "arithmetic processing device".

The deep learning execution processor 23 is coupled to the controller 22 and the memory access controller 24. The deep learning execution processor 23 receives the program and data that have been provided from the host machine 1 via the controller 22. Then, the deep learning execution processor 23 uses the received program and the received data to execute a process in the deep learning.

The high-speed input and output interface 21 is a communication interface with the host machine 1. The high-speed input and output interface 21 executes communication using the protocol, such as PCI Express, for example.

The controller 22 drives the deep learning execution processor 23 in accordance with an instruction from the host machine 1 and transfers the program and the data to the internal RAM 25 in accordance with an instruction from the host machine 1.

The memory access controller 24 selects signals from the controller 22 and the deep learning execution processor 23 and accesses the internal RAM 25 in accordance with a protocol for memory access.

The internal RAM 25 stores the program to be executed by the deep learning execution processor 23, the data to be processed in the deep learning, and data of results of the deep learning. As the internal RAM 25, a higher-speed Graphics Double Data Rate 5 (GDDR5) memory than the DDR4-SDRAM, a higher-bandwidth memory (HBM) 2 than the DDR4-SDRAM, or the like may be used.

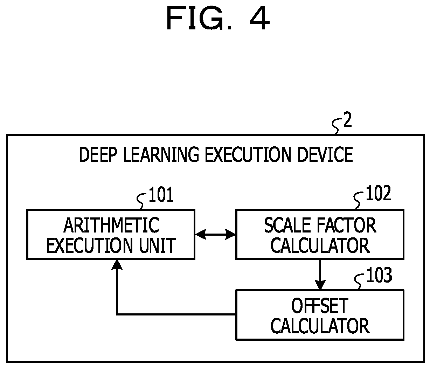

Next, a deep learning process by the deep learning execution device 2 according to the embodiment is described with reference to FIG. 4. FIG. 4 is a block diagram of the deep learning execution device according to the embodiment.

The deep learning execution device 2 includes an arithmetic execution unit 101, a scale factor calculator 102, and an offset calculator 103. The units 101 to 103 are realized by causing the deep learning execution processor 23 illustrated in FIG. 3 to load the program into the internal RAM 25 and execute the program.

The arithmetic execution unit 101 repeatedly executes similar fixed-point arithmetic operations a plurality of times to execute a learning process and the deep learning. For example, as the learning process, the arithmetic execution unit 101 divides learning data into sets, which are referred to as mini-batches, and executes a forward propagation process, a back-propagation process, and a parameter update process on the divided learning data.

The arithmetic execution unit 101 executes the forward propagation process, the back-propagation process, and the parameter update process in a neural network having multiple layers. Although details of calculation executed in the layers are different, the arithmetic execution unit 101 executes, for example, a convolution operation and a full connection operation, which is also referred to as an inner product operation. The arithmetic execution unit 101 executes, for example, batch normalization, a rectified linear unit (ReLU) operation, a pooling operation, a softmax operation, an error evaluation operation, and the like. The ReLU operation is also referred to as an activation operation. For example, the convolution operation is also referred to as a filter operation and is mainly executed on image data.

In the convolution operation, filters are prepared for all combinations of input and output channels, and an output value is calculated by adding a bias to the sum of results of all the input channels. The full connection operation is also referred to as an inner product operation. In the full connection operation, weights are defined for all combinations of input and output, products of all the input and the weights for all the input are calculated, an output value is calculated by adding a bias to the sum of the products.

For example, in image classification, the arithmetic execution unit 101 executes the convolution operation, the ReLU operation, and the pooling operation in some initial layers of the neural network. After that, the arithmetic execution unit 101 executes the full connection operation and the ReLU operation. Lastly, the arithmetic execution unit 101 executes the softmax operation to output probabilities of classification categories for an input image.

A set of the forward propagation process, the back-propagation process, and the parameter update process for a single batch is referred to as an iteration. A unit of the learning process for all learning data is referred to as an epoch. Each of epochs includes a plurality of iterations. After the arithmetic execution unit 101 completely processes all mini-batches, the arithmetic execution unit 101 updates a parameter and executes the learning process on the same data again. The parameter is referred to as a learning rate. Arithmetic operations to be executed in the iteration are an example of "similar fixed-point arithmetic operations" to be repeatedly executed a plurality of times.

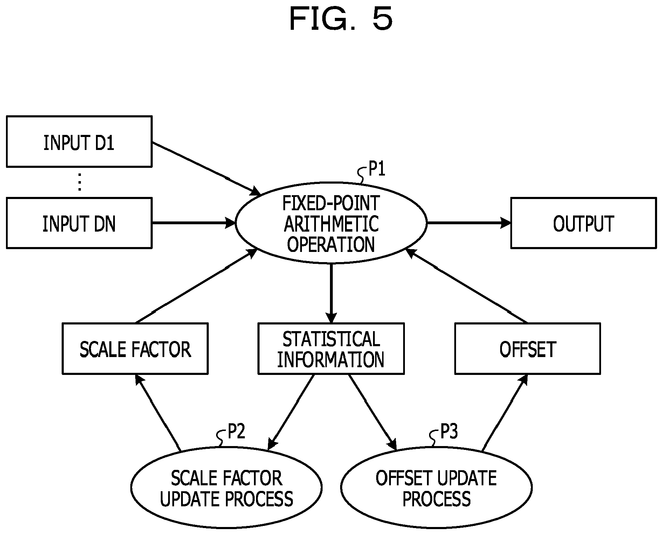

FIG. 5 illustrates an overview of an arithmetic operation. The arithmetic execution unit 101 repeatedly executes the arithmetic operation in each of iterations in a flow illustrated in FIG. 5. The arithmetic execution unit 101 executes the fixed-point arithmetic operation illustrated in FIG. 5 in the forward propagation process, the back-propagation process, and the parameter update process in each of the iterations.

For example, the arithmetic execution unit 101 acquires input D1 to DN. The arithmetic execution unit 101 acquires a scale factor calculated from statistical information acquired in a previous iteration. The scale factor used in the embodiment is a value represented by 2^{ω} (ω is an integer). The arithmetic execution unit 101 multiplies the scale factor of 2^{ω} by a number not expressed in fixed-point representation, truncates a decimal part of the result of the multiplication, and represents the result of the truncation as a signed integer value to apply fixed-point representation to the original number. For example, the arithmetic execution unit 101 calculates R(x, ω) in accordance with R(x, ω) = ceil(x × 2^{ω}). R(x, ω) is the fixed-point representation of a value x. This scale factor is an example of "decimal point position information". The scale factor according to the embodiment is a real number specifying the least significant bit among bits indicating a decimal part of a fixed-point number represented using bits. However, other representation may be applied to the scale factor as long as the scale factor is information indicating a decimal point position in the fixed-point number.

The arithmetic execution unit 101 acquires an offset from the offset calculator 103. The offset is a value to be used to cause the fixed-point number to have an extra upper digit when the fixed-point representation is applied. The offset is periodically updated.

Then, in a normal arithmetic operation, the arithmetic execution unit 101 executes the fixed-point arithmetic operation P1 on the input D1 to DN. For example, the arithmetic execution unit 101 uses the input D1 to DN to execute the arithmetic operation and obtains a result of the arithmetic operation before the fixed-point representation. For example, in multiplication using input data of 8 bits, the arithmetic execution unit 101 executes the arithmetic operation and causes the result of the arithmetic operation to be stored in a 16-bit register. For example, in this state, information on the input data is not lost. Then, the arithmetic execution unit 101 outputs the result of the arithmetic operation before the fixed-point representation to the scale factor calculator 102. After that, the arithmetic execution unit 101 uses, as an exponent, a value obtained by adding the offset to the exponent of the scale factor for the result of the arithmetic operation to apply the fixed-point representation to output data and calculate a fixed-point number to be output. After that, the arithmetic execution unit 101 outputs the calculated fixed-point number as the result of the fixed-point arithmetic operation P1.

For example, when the scale factor is 2^{ω}, the exponent of the scale factor is ω. When the offset is d, the arithmetic execution unit 101 treats ω + d as an exponent to be used for the fixed-point representation. For example, the arithmetic execution unit 101 calculates, as ceil(x × 2^{ω+d}), R(x, ω) that is the fixed-point representation of the value x. The value obtained by adding the offset to the exponent of the scale factor is an example of "adjusted decimal point position information".

The arithmetic execution unit 101 repeatedly executes the arithmetic operation using, as input of the next iteration, the data output as the result of the fixed-point arithmetic operation P1 illustrated in FIG. 5. When the arithmetic execution unit 101 terminates the execution of iterations executed a specified number of times, the arithmetic execution unit 101 terminates the learning.

On the other hand, when the current iteration reaches a predetermined offset update iteration, the arithmetic execution unit 101 executes an offset update process. One or multiple iterations among the iterations to be repeatedly executed is or are determined as the offset update iteration. For example, the offset update iteration is executed for every predetermined number of times. In the embodiment, the offset update iteration is repeatedly executed for every 100,000 iterations. Alternatively, for example, the offset update iteration may be repeatedly executed for each of the epochs.

In the offset update process, the arithmetic execution unit 101 executes the arithmetic operation using the input D1 to DN to obtain a calculation result before the fixed-point representation. Then, the arithmetic execution unit 101 outputs the calculation result before the fixed-point representation to the offset calculator 103. After that, the arithmetic execution unit 101 acquires the updated offset from the offset calculator 103. Then, the arithmetic execution unit 101 uses the scale factor acquired from the scale factor calculator 102 and the new offset acquired from the offset calculator 103 to execute the fixed-point arithmetic operation P1 on the input D1 to DN and outputs the result of the arithmetic operation.

Return to FIG. 4 to continue the description. The scale factor calculator 102 acquires the calculation result obtained by the arithmetic execution unit 101 before the fixed-point representation. Then, the scale factor calculator 102 uses the acquired calculation result before the fixed-point representation to execute a scale factor update process P2 illustrated in FIG. 5. The scale factor update process P2 is described below in detail.

The scale factor calculator 102 calculates statistical information of the calculation result acquired from the arithmetic execution unit 101 before the fixed-point representation. In the embodiment, the scale factor calculator 102 calculates a histogram of unsigned most significant bit (MSB) positions and acquires, as the statistical information, a distribution of the unsigned most significant bit positions. Alternatively, as the statistical information, a distribution of non-zero least significant bit positions, the maximum value of the unsigned most significant bits, the minimum value of the non-zero least significant bit positions, or the like may be used. The statistical information of the calculation result before the fixed-point representation is an example of "statistical information on arithmetic operations of each of iterations".

Next, the scale factor calculator 102 analyzes the calculated statistical information and calculates a scale factor to be used in the next iteration. After that, the scale factor calculator 102 outputs, to the arithmetic execution unit 101, the calculated scale factor as the scale factor to be used in the next iteration. In the offset update iteration, the scale factor calculator 102 outputs the calculated scale factor to the offset calculator 103. The scale factor calculator 102 is an example of an "acquirer".

When the current iteration reaches the offset update iteration, the offset calculator 103 acquires, from the arithmetic execution unit 101, the calculation result obtained from the input data of the concerned iteration before the fixed-point representation. The offset calculator 103 receives, from the scale factor calculator 102, input of the scale factor calculated in the concerned iteration. Then, the offset calculator 103 executes an offset update process P3 illustrated in FIG. 5 to update the offset. In the embodiment, the offset update iteration is repeatedly executed for every 100,000 iterations. For example, the offset calculator 103 updates the offset for every 100,000 iterations. 100,000 iterations are an example of "a predetermined number of times". The offset update process P3 is described below in detail.

The offset calculator 103 analyzes the acquired calculation result before the fixed-point representation and calculates statistical information. Then, the offset calculator 103 calculates a scale factor from the calculated statistical information. A method for calculating the scale factor may be the same as the method by the scale factor calculator 102. Then, the offset calculator 103 calculates a difference between the exponent of the scale factor calculated from the input data of the current iteration and the exponent of the scale factor acquired from the scale factor calculator 102 and sets the calculated difference as the offset. After that, the offset calculator 103 outputs the newly calculated offset to the arithmetic execution unit 101. The offset calculator 103 is an example of an "adjustment amount calculator". The offset is an example of an "adjustment amount".

The offset according to the embodiment is described below. For example, in the embodiment, R(x, ω) that is the fixed-point representation of the value x is represented using R(x, ω) = ceil(x × 2^{ω}). In this case, reducing a value of ω that is an exponent of 2 enables a fixed-point number to have an extra upper digit when the fixed-point representation is applied. For example, 0.75 in decimal representation is described using binary fixed-point representation. 0.75 is expressed by 0.11 in binary representation. When ω = 7, R(0.75, 7) = ceil(0.75 × 2⁷) = 96. On the other hand, when ω = 4, R(0.75, 4) = ceil(0.75 × 2⁴) = 12. For example, reducing ω from 7 to 4 may increase 3 bits of a fixed-point number as extra upper digits when the fixed-point number is represented in bits. For example, reducing a value corresponding to the offset from the exponent of the scale factor enables a fixed-point number to have an extra upper digit and may avoid digit overflow.

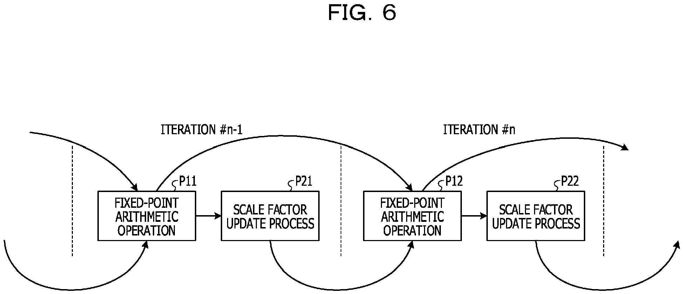

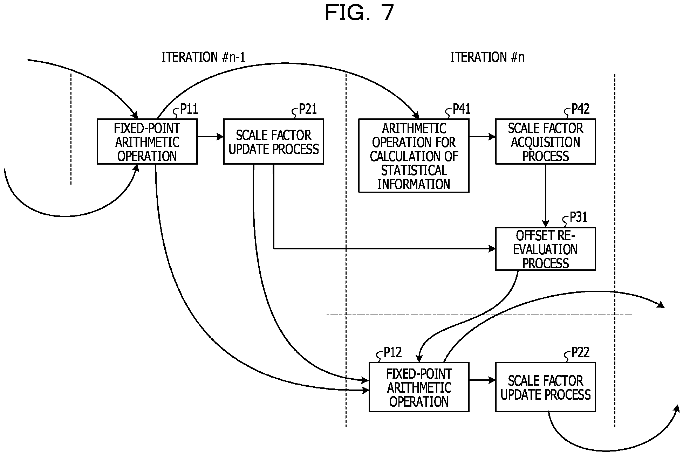

Relationships between processes to be executed in iterations are described with reference to FIGs. 6 and 7. FIG. 6 is a diagram illustrating relationships between processes to be executed in iterations in the normal arithmetic operation. FIG. 7 is a diagram illustrating relationships between processes to be executed in iterations in the offset update. An n-1-th iteration #n-1 and an n-th iteration #n are described as an example.

In the normal arithmetic operation, a fixed-point arithmetic operation P11 is executed in the iteration #n-1, as illustrated in FIG. 6. A scale factor update process P21 is executed using a calculation result obtained in the fixed-point arithmetic operation P11 before the fixed-point representation. Then, in the iteration #n, a fixed-point arithmetic operation P12 is executed using, as input data, data output in the fixed-point arithmetic operation P11 and using a scale factor calculated in a scale factor update process P21 and the offset used in the previous iteration. A scale factor update process P22 is executed using a calculation result obtained in the fixed-point arithmetic operation P12 before the fixed-point representation. A scale factor calculated in the scale factor update process P22 is used in the next iteration.

In the normal arithmetic operation, the fixed-point representation is applied in the next iteration using a scale factor calculated in the previous iteration. When distributions of data generated in iterations vary or, for example, statistical information varies, the scale factor calculated in the previous iteration is used, and the existing offset is used, digit overflow or the like may occur and a value may not be correctly represented.

It is, therefore, preferable that the offset be adjusted to suppress digit overflow or the like and calculate a correct value when the statistical information varies. For example, in the embodiment, the offset update iteration is executed for every 100, 000 iterations, and the offset is updated and set based on the statistical information at the time of the update.

For example, when the iteration #n is the offset update iteration, an arithmetic operation P41 for calculation of the statistical information is executed using the data output in the fixed-point arithmetic operation P11 in the iteration #n, as illustrated in FIG. 7. The operation P41 for the calculation of the statistical information is an arithmetic operation of obtaining the calculation result before the fixed-point representation in the fixed-point arithmetic operation P12. Next, a scale factor acquisition process P42 of calculating a scale factor from the calculation result obtained in the iteration #n before the fixed-point representation is executed. Then, an offset re-evaluation process P31 of comparing a scale factor calculated in the iteration #n-1 with the scale factor calculated in the iteration #n and re-evaluating and updating the offset is executed. After that, the process returns to the normal arithmetic operation. The fixed-point arithmetic operation P12 is executed using the output of the fixed-point arithmetic operation P11 as input data and using the scale factor calculated in the scale factor update process P21 and the new offset calculated in the offset re-evaluation process P31. The scale factor update process P22 is executed using the calculation result obtained in the fixed-point arithmetic operation P12 before the fixed-point representation. The scale factor calculated in the scale factor update process P22 is used in the next iteration.

As described above, in the iteration #n that is illustrated in FIG. 7 and is the offset update iteration, the offset update process indicated above a chain line on the sheet of FIG. 7 is executed. After that, in the iteration #n, the normal arithmetic operation indicated under the chain line is executed using the new offset calculated in the offset update process.

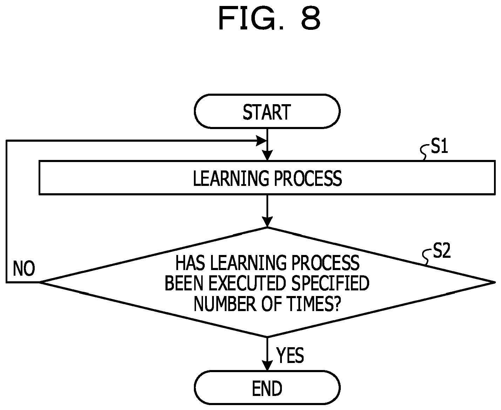

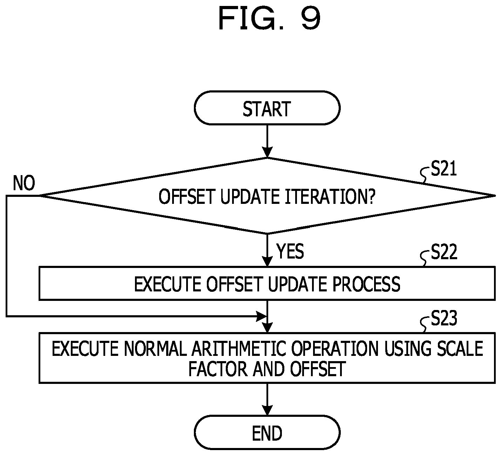

Next, an entire flow of the deep learning is described with reference to FIGs. 8 and 9. FIG. 8 is a flowchart of a process of the entire deep learning. FIG. 9 is a flowchart of switching between the offset update process and the normal arithmetic operation in the learning process.

The deep learning execution device 2 receives input of the program and learning data from the host machine 1. Then, the deep learning execution device 2 divides the learning data into mini-batches and executes the learning process including the forward propagation process, the back-propagation process, and the parameter update process (in step S1). The learning process executed once corresponds to one iteration.

After that, the deep learning execution device 2 determines whether the learning process has been executed a specified number of times (in step S2). When the learning process has not been completely executed the specified number of times (No in step S2), the deep learning execution device 2 causes the process to return to step S1. On the other hand, when the learning process has been completely executed the specified number of times (Yes in step S2), the deep learning execution device 2 terminates the deep learning.

In this manner, the deep learning execution device 2 executes the process on the entire learning data the specified number of times as the entire process. In the deep learning to be executed by the deep learning execution device 2, a condition for the termination of the learning is that an evaluation value of a learning result that is represented as an error is in a fixed range, depending on implementation.

Processes illustrated in FIG. 9 are an example of the process executed in step S1 illustrated in FIG. 8.

The deep learning execution device 2 determines whether the current iteration is the offset update iteration (in step S21). When the current iteration is not the offset update iteration (No in step S21), the deep learning execution device 2 causes the process to proceed to step S23.

On the other hand, when the current iteration is the offset update iteration (Yes in step S21), the deep learning execution device 2 executes the offset update process (in step S22).

After that, the deep learning execution device 2 executes the normal arithmetic operation using a scale factor calculated in the previous iteration and the offset (in step S23).

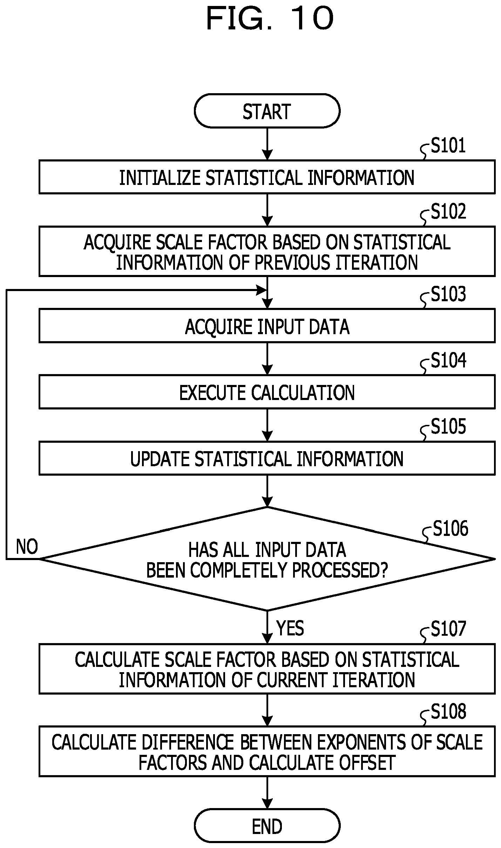

Next, the flow of the offset update process is described with reference to FIG. 10. FIG. 10 is a flowchart of the offset update process. Processes illustrated in FIG. 10 are an example of the process executed in step S22 illustrated in FIG. 9.

The offset calculator 103 initializes statistical information held in the offset calculator 103 (in step S101).

Next, the offset calculator 103 acquires, from the scale factor calculator 102, the scale factor calculated from the statistical information of the previous iteration (in step S102).

The arithmetic execution unit 101 acquires, as input data, output of a fixed-point arithmetic operation executed in the previous iteration (in step S103).

Next, the arithmetic execution unit 101 executes calculation using the acquired input data (in step S104). By executing this calculation, the arithmetic execution unit 101 obtains the calculation result before the fixed-point representation. Then, the arithmetic execution unit 101 outputs the obtained calculation result before the fixed-point representation to the offset calculator 103.

The offset calculator 103 receives, from the arithmetic execution unit 101, input of the calculation result before the fixed-point representation in the current iteration. Next, the offset calculator 103 adds the statistical information acquired from the received calculation result before the fixed-point representation to the statistical information held at this time to update the statistical information (in step S105).

Next, the offset calculator 103 determines whether all input data has been completely processed (in step S106). When input data that is not yet processed remains (No in step S106), the offset calculator 103 causes the process to return to step S103.

On the other hand, when all the input data has been completely processed (Yes in step S106), the offset calculator 103 calculates a scale factor based on the statistical information of the current iteration (in step S107).

Next, the offset calculator 103 calculates a difference between the exponent of the scale factor based on the statistical information of the current iteration and the exponent of the scale factor based on the statistical information of the previous iteration to calculate an offset (in step S108). After that, the offset calculator 103 outputs the calculated new offset to the arithmetic execution unit 101.

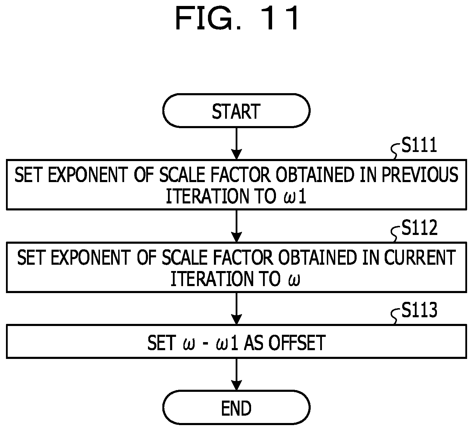

The flow of an offset calculation process is described with reference to FIG. 11. FIG. 11 is a flowchart of the offset calculation process in the case where a difference between exponents of scale factors is set as the offset.

The offset calculator 103 sets the exponent of the scale factor obtained in the previous iteration to ω1 (in step S111).

The offset calculator 103 sets the exponent of the scale factor obtained in the current iteration to ω (in step S112).

Then, the offset calculator 103 calculates ω - ω1 as the offset (in step S113).

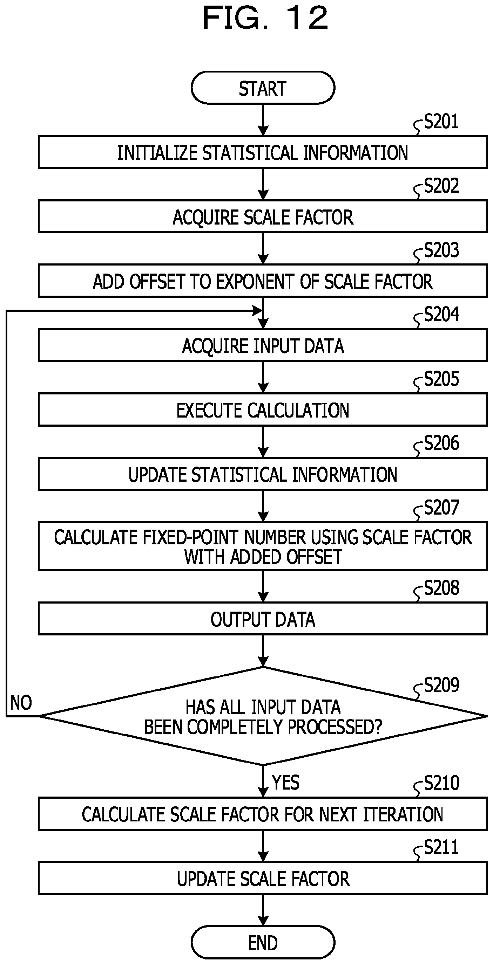

Next, the flow of the normal arithmetic operation is described with reference to FIG. 12. FIG. 12 is a flowchart of the normal arithmetic operation. Processes illustrated in FIG. 12 are an example of the process executed in step S23 illustrated in FIG. 9.

The scale factor calculator 102 initializes the statistical information held in the scale factor calculator 102 (in step S201).

Next, the arithmetic execution unit 101 acquires, from the scale factor calculator 102, the scale factor calculated from the statistical information of the previous iteration (in step S202).

Then, the arithmetic execution unit 101 adds the offset to the exponent of the acquired scale factor (in step S203).

The arithmetic execution unit 101 acquires, as input data, output of a fixed-point arithmetic operation executed in the previous iteration (in step S204).

Next, the arithmetic execution unit 101 executes calculation using the input data (in step S205). By executing this calculation, the arithmetic execution unit 101 obtains the calculation result before the fixed-point representation. Then, the arithmetic execution unit 101 outputs the obtained calculation result before the fixed-point representation to the scale factor calculator 102.

The scale factor calculator 102 receives, from the arithmetic execution unit 101, input of the calculation result before the fixed-point representation in the current iteration. Next, the scale factor calculator 102 adds the statistical information acquired from the obtained calculation result before the fixed-point representation to the statistical information held at this time to update the statistical information (in step S206).

The arithmetic execution unit 101 calculates a fixed-point number using the scale factor with the offset added thereto (in step S207).

Then, the arithmetic execution unit 101 outputs the calculated fixed-point number (in step S208).

After that, the arithmetic execution unit 101 determines whether all input data has been completely processed (in step S209). When input data that is not yet processed remains (No in step S209), the arithmetic execution unit 101 causes the process to return to step S204.

On the other hand, when all the input data has been completely processed (Yes in step S209), the scale factor calculator 102 uses the statistical information of the current iteration to calculate a scale factor for the next iteration (in step S210).

After that, the scale factor calculator 102 outputs the calculated scale factor to the arithmetic execution unit 101 and updates the scale factor used by the arithmetic execution unit 101 (in step S211).

As described above, the deep learning execution device according to the embodiment adjusts the offset based on a change in the statistical information and executes the fixed-point arithmetic operation. This may improve the accuracy of the result of the arithmetic operation and improve the accuracy of the learning.

In an iteration in the offset update, since the two arithmetic operations are executed or the arithmetic operation for the offset update and the normal arithmetic operation are executed, calculation cost for the update of the offset occurs, compared to the case where the offset is not updated. However, the offset update may not be frequently executed and may be executed for every approximately 100,000 iterations. Therefore, the calculation cost for the offset update is not so large and an execution time for the offset update is not so long, compared to the entire learning process. Accordingly, it may be possible to improve the accuracy of the learning while suppressing an increase in calculation cost for the learning and an increase in the execution time of the learning.

### (Modifications)

In the embodiment, a value obtained by subtracting an exponent of a scale factor calculated in a current iteration from an exponent of a scale factor calculated in a previous iteration is used as an offset. However, another index may be used as the offset. It is preferable that the index be determined as the offset based on learning data to be used and details of the arithmetic operations.

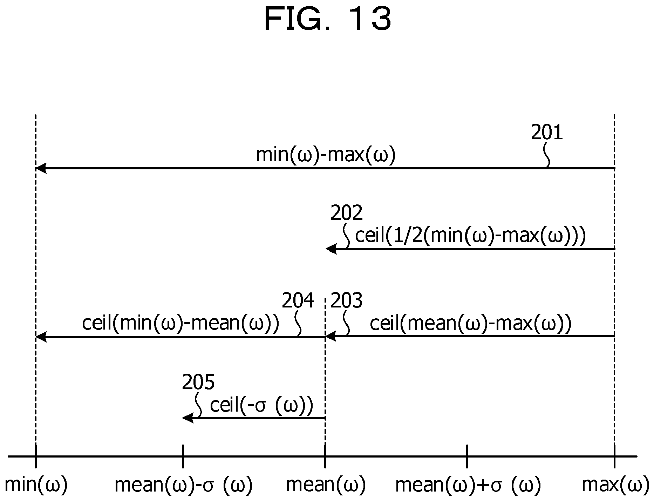

FIG. 13 is a diagram illustrating some examples of the index able to be used as the offset. In this case, scale factors calculated in iterations from the previous iteration of the offset update iteration to the N-th previous iteration of the offset update iteration are set to 2^{ω1}, 2^{ω2}, ..., and 2^{ωN}. A scale factor calculated in the offset update iteration is set to 2^{ω}. For example, the exponent of the scale factor calculated in the offset update iteration is ω, while exponents of the scale factors calculated in the iterations from the previous iteration of the offset update iteration to the N-th previous iteration of the offset update iteration are ω1, ω2, ..., and ωN. The average of ω, ω1, ω2, ..., and ωN is mean(ω), a standard deviation of ω, ω1, ω2, ..., and ωN is σ(ω), and the maximum value of ω, ω1, ω2, ..., and ωN is max(ω), and the minimum value of ω, ω1, ω2, ..., and ωN is min(ω).

For example, FIG. 13 illustrates offsets 201 to 205 as the examples of the index able to be used as the offset. The offset 201 is a value obtained by subtracting the maximum value of the exponents of the scale factors from the minimum value of the exponents of the scale factors. The offset 202 is a value obtained by truncating a decimal part of half of the value obtained by subtracting the maximum value of the exponents of the scale factors from the minimum value of the exponents of the scale factors. The offset 203 is a value obtained by truncating a decimal part of a value obtained by subtracting the maximum value of the exponents of the scale factors from the average value of the exponents of the scale factors. The offset 204 is a value obtained by truncating a decimal part of a value obtained by subtracting the average value of the exponents of the scale factors from the minimum value of the exponents of the scale factors. The offset 205 is a value obtained by truncating a decimal part of a value obtained by truncating a decimal part of a value obtained by reversing the sign of a standard deviation of the exponents of the scale factors. The flows of processes of calculating the offsets are described below.

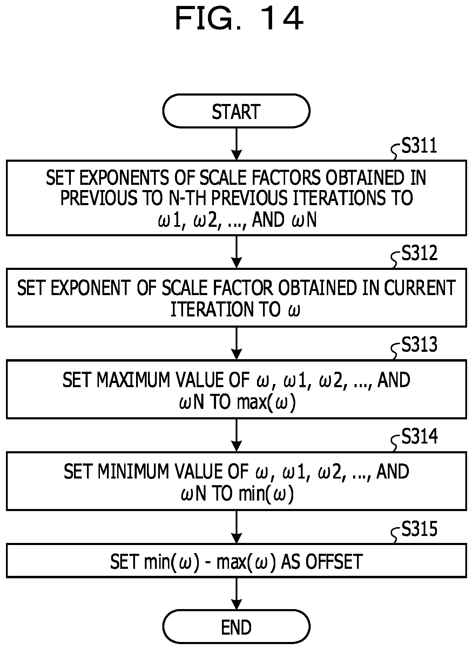

FIG. 14 is a flowchart of the offset calculation process in the case where the value obtained by subtracting the maximum value of the exponents of the scale factors from the minimum value of the exponents of the scale factors is set as the offset.

The offset calculator 103 acquires, from the scale factor calculator 102, the scale factors obtained in the previous to N-th previous iterations. Then, the offset calculator 103 sets the exponents of the scale factors obtained in the previous to N-th previous iterations to ω1, ω2, ..., and ωN (in step S311).

Next, the offset calculator 103 calculates a scale factor from statistical information of the current iteration. Then, the offset calculator 103 sets an exponent of the scale factor obtained in the current iteration to ω (in step S312).

Next, the offset calculator 103 sets the maximum value of ω, ω1, ω2, ..., and ωN to max(ω) (in step S313).

Next, the offset calculator 103 sets the minimum value of ω, ω1, ω2, ..., and ωN to min(ω) (in step S314).

After that, the offset calculator 103 sets min(ω) - max(ω) as the offset (in step S315).

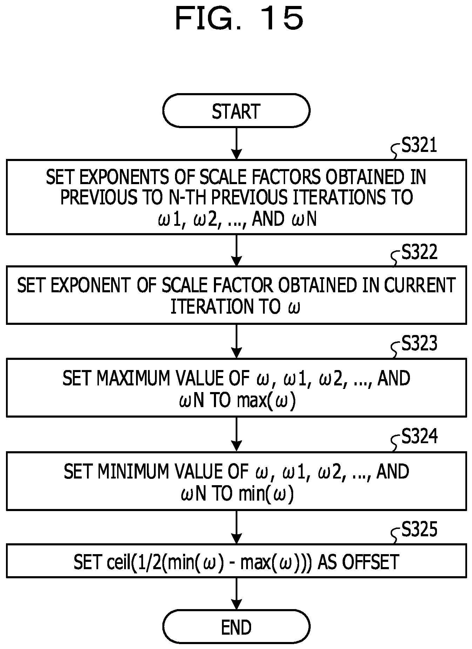

FIG. 15 is a flowchart of the offset calculation process in the case where the value obtained by truncating the decimal part of half of the value obtained by subtracting the maximum value of the exponents of the scale factors from the minimum value of the exponents of the scale factors is set as the offset.

The offset calculator 103 acquires, from the scale factor calculator 102, the scale factors obtained in the previous to N-th previous iterations. Then, the offset calculator 103 sets the exponents of the scale factors obtained in the previous to N-th previous iterations to ω1, ω2, ..., and ωN (in step S321).

Next, the offset calculator 103 calculates the scale factor from the statistical information of the current iteration. Then, the offset calculator 103 sets the exponent of the scale factor obtained in the current iteration to ω (in step S322).

Next, the offset calculator 103 sets the maximum value of ω, ω1, ω2, ..., and ωN to max(ω) (in step S323).

Next, the offset calculator 103 sets the minimum value of ω, ω1, ω2, ..., and ωN to min(ω) (in step S324).

After that, the offset calculator 103 sets, as the offset, the value obtained by truncating the decimal part of half of the value of (min(ω) - max(ω)) (in step S325).

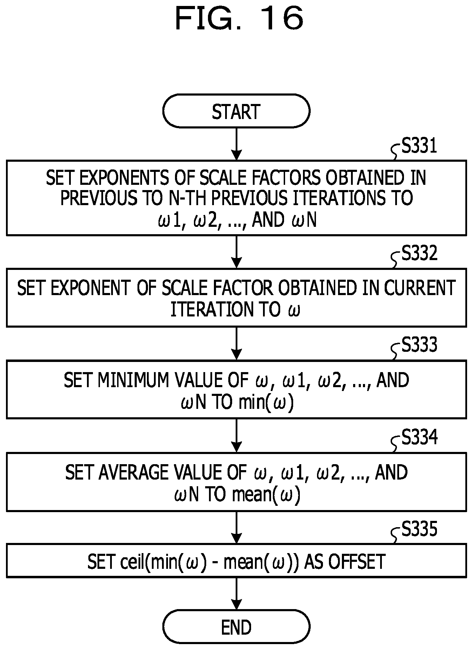

FIG. 16 is a flowchart of the offset calculation process in the case where the value obtained by truncating the decimal part of the value obtained by subtracting the maximum value of the exponents of the scale factors from the average value of the exponents of the scale factors is set as the offset.

The offset calculator 103 acquires, from the scale factor calculator 102, the scale factors obtained in the previous to N-th previous iterations. Then, the offset calculator 103 sets the exponents of the scale factors obtained in the previous to N-th previous iterations to ω1, ω2, ..., and ωN (in step S331).

Next, the offset calculator 103 calculates the scale factor from the statistical information of the current iteration. Then, the offset calculator 103 sets the exponent of the scale factor obtained in the current iteration to ω (in step S332).

Next, the offset calculator 103 sets the minimum value of ω, ω1, ω2, ..., and ωN to min(ω) (in step S333).

Next, the offset calculator 103 sets the average value of ω, ω1, ω2, ..., and ωN to mean(ω) (in step S334).

After that, the offset calculator 103 sets, as the offset, the value obtained by truncating the decimal part of the value of (min(ω) - mean(ω)) (in step S335).

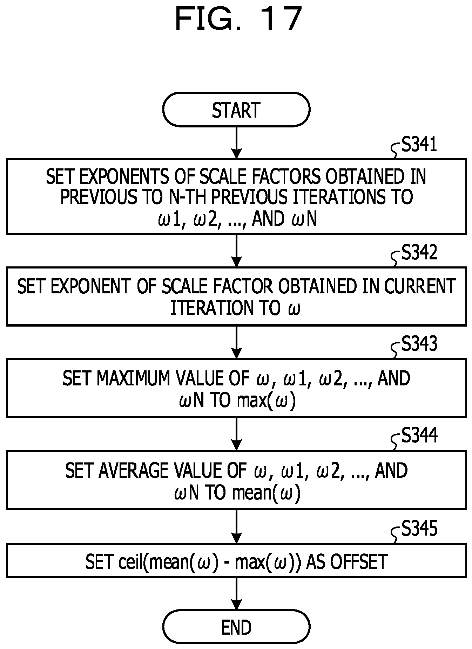

FIG. 17 is a flowchart of the offset calculation process in the case where the value obtained by truncating the decimal part of the value obtained by subtracting the average value of the exponents of the scale factors from the minimum value of the exponents of the scale factors is set as an offset.

The offset calculator 103 acquires, from the scale factor calculator 102, the scale factors obtained in the previous to N-th previous iterations. Then, the offset calculator 103 sets the exponents of the scale factors obtained in the previous to N-th previous iterations to ω1, ω2, ..., and ωN (in step S341).

Next, the offset calculator 103 calculates the scale factor from the statistical information of the current iteration. Then, the offset calculator 103 sets the exponent of the scale factor obtained in the current iteration to ω (in step S342).

Next, the offset calculator 103 sets the maximum value of ω, ω1, ω2, ..., and ωN to max(ω) (in step S343).

Next, the offset calculator 103 sets the average value of ω, ω1, ω2, ..., and ωN to mean(ω) (in step S344).

After that, the offset calculator 103 sets, as the offset, the value obtained by truncating the decimal part of the value of (mean(ω) - max(ω)) (in step S345).

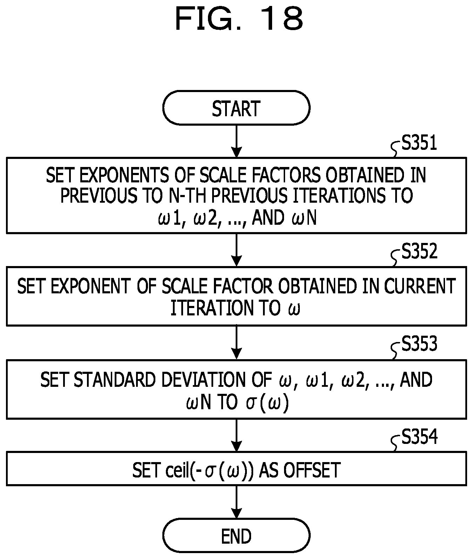

FIG. 18 is a flowchart of the offset calculation process in the case where the value obtained by truncating the decimal part of the value obtained by reversing the sign of the standard deviation of the exponents of the scale factors is set as the offset.

The offset calculator 103 acquires, from the scale factor calculator 102, the scale factors obtained in the previous to N-th previous iterations. Then, the offset calculator 103 sets the exponents of the scale factors obtained in the previous to N-th previous iterations to ω1, ω2, ..., and ωN (in step S351).

Next, the offset calculator 103 calculates the scale factor from the statistical information of the current iteration. Then, the offset calculator 103 sets the exponent of the scale factor obtained in the current iteration to ω (in step S352).

Next, the offset calculator 103 sets the standard deviation of ω, ω1, ω2, ..., and ωN to σ(ω) (in step S353).

After that, the offset calculator 103 sets, as the offset, the value obtained by truncating the decimal part of the value of -σ(ω) (in step S354).

As described above, each of various values may be used as the index indicating the offset. Even when any of the values is used as the index indicating the offset, an offset based on statistical information may be set in each of stages of the learning process, more reliable calculation results may be obtained, and the learning accuracy may be improved.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

### [REFERENCE SIGNS LIST]

- 1: Host machine
- 2: Deep learning execution device
- 3: User terminal
- 11: High-speed input and output interface
- 12: Processor
- 13: RAM
- 14: Internal bus
- 15: HDD
- 16: Low-speed input and output interface
- 21: High-speed input and output interface
- 22: Controller
- 23: Deep learning execution processor
- 24: Memory access controller
- 25: Internal RAM
- 101: Arithmetic execution unit
- 102: Scale factor calculator
- 103: Offset calculator

## Claims

1. An arithmetic processing device comprising:
an arithmetic execution unit that acquires decimal point position information and an adjustment amount and uses the acquired decimal point position information and the acquired adjustment amount to repeatedly execute similar fixed-point arithmetic operations a plurality of times;
an acquirer that acquires, in each of iterations, decimal point position information of the next iteration from statistical information on the arithmetic operations of each of the iterations and provides the acquired decimal point position information to the arithmetic execution unit; and
an adjustment amount calculator that calculates an adjustment amount based on a result of comparing the decimal point position information of the next iteration with the decimal point position information of the previous iteration and provides the calculated adjustment amount to the arithmetic execution unit.

2. The arithmetic processing device according to claim 1, wherein
the adjustment amount calculator calculates and provides the adjustment amount every time the fixed-point arithmetic operations are repeatedly executed by the arithmetic execution unit a predetermined number of times.

3. The arithmetic processing device according to claim 1 or 2, wherein
the decimal point position information is a real number specifying the least significant bit among bits indicating a decimal part of a fixed-point number indicated by a plurality of bits that are used in the fixed-point arithmetic operations.

4. The arithmetic processing device according to any of claims 1 to 3, wherein
the decimal point position information is represented by an exponent of 2.

5. The arithmetic processing device according to any of claims 1 to 4, wherein
the arithmetic execution unit adds the adjustment amount to an exponent of the decimal point position information provided from the acquirer and sets the adjustment amount with the added exponent to the adjusted decimal point position information to be used in the fixed-point arithmetic operations.

6. The arithmetic processing device according to any of claims 1 to 5, wherein
the acquirer acquires the decimal point position information from statistical information of calculation results obtained in the arithmetic operations of each of the iterations before fixed-point representation is applied.

7. A program for controlling an arithmetic processing device that repeatedly executes similar fixed-point arithmetic operations a plurality of times and causing the arithmetic processing device to execute a process, the process comprising:
acquiring, in each of iterations, decimal point position information of the next iteration from statistical information on the arithmetic operations of each of the iterations;
calculating an adjustment amount based on a result of comparing the decimal point position information of the next iteration with the decimal point position information of the previous iteration; and
using the decimal point position information of the next iteration and the adjustment amount to execute the fixed-point arithmetic operations in the next iteration.

8. A method for controlling an arithmetic processing device that repeatedly executes similar fixed-point arithmetic operations a plurality of times and causing the arithmetic processing device to execute a process, the process comprising:
acquiring, in each of iterations, decimal point position information of the next iteration from statistical information on the arithmetic operations of each of the iterations;
calculating an adjustment amount based on a result of comparing the decimal point position information of the next iteration with the already acquired decimal point position information of the previous iteration; and
using the decimal point position information of the next iteration and the adjustment amount to execute the fixed-point arithmetic operations in the next iteration.
